# EUROPEAN PATENT APPLICATION

(11) **EP 3 939 953 A1**
(43) Date of publication of application: **19.01.2022**
(21) Application number: 19919831.8
(22) Date of filing: 20.12.2019
(51) Int. Cl.: C06D 5/00, C09K 3/00, C08J 9/06

(54) **GAS GENERATING AGENT, FOAMING COMPOSITION, FOAM, AND METHOD FOR PRODUCING FOAM**

(30) Priority: 15.03.2019 JP 2019048376
(71) Applicant: Eiwa Chemical Ind. Co., Ltd., Kyoto-shi, Kyoto 604-8161 (JP); MITSUBISHI GAS CHEMICAL COMPANY, INC., Chiyoda-ku Tokyo 100-8324 (JP)
(72) Inventor: NAKATA, Kazuya, Handa-shi, Aichi 475-0033 (JP); UCHIYAMA, Junya, Handa-shi, Aichi 475-0033 (JP); UERA, Kazuyoshi, Tokyo 125-8601 (JP); KAGEYAMA, Takuya, Tokyo 125-8601 (JP)
(74) Representative: Müller-Boré & Partner Patentanwälte PartG mbB
(86) International application number: PCT/JP2019/050076
(87) International publication number: WO 2020/188931

(57) **Abstract**

An object of the present invention is to provide a gas generating agent having an appropriate initial decomposition temperature, generating a large amount of gas, and generating only a small amount of ammonia gas. The object can be accomplished by a gas generating agent containing a guanidine derivative represented by the following formula (1).

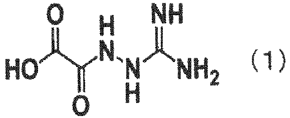

## Description

### Technical Field

The present invention relates to a gas generating agent, a foamable composition, a foam, and a method of producing a foam.

### Background Art

Azodicarbonamide (hereinafter, also referred to as "ADCA"), a typical gas generating agent, is a compound used in a broad range of applications as a chemical blowing agent of plastics and rubbers in general.

Advantages of ADCA include the following: the amount of gas generation is 200 mL/g or more, which is larger than that of other commercially available chemical blowing agents; although the initial decomposition temperature is 200 to 210°C, which is relatively high, the initial decomposition temperature can be lowered to approximately 140°C by using a foaming auxiliary in combination, thereby ADCA is applicable for general-purpose plastics (for example, thermoplastic resins) and rubbers; and ADCA is highly safe in terms of handling since the main component of the generated gas, nitrogen, is self-extinguishing.

On the other hand, ADCA has the following problems and the like: the generated gas during foaming contains a small amount of ammonia gas, and this ammonia gas is corrosive; and cyanic acid, which is a decomposition product of ADCA, is sublimable and polymerizes after sublimation to become corrosive cyanuric acid, which is likely to cause mold contamination (see, for example, Patent Literature 1 and Non Patent Literature 1).

In the fields that do not welcome such disadvantages of ADCA, i.e., ammonia and contaminating characteristics, 4,4'-oxybis(benzenesulfonyl hydrazide) (hereinafter also referred to as "OBSH") in which the generated gas is only nitrogen and water, and in which the decomposition product is non-contaminating is used as a gas generating agent. OBSH has a low initial decomposition temperature of about 170°C, and is mainly used for an ethylene-propylene-diene rubber (EPDM) for weather strips and a chloroprene rubber (CR) for wet suits. OBSH is, however, problematic from the viewpoint of economy and resource saving because the amount of gas generation is as small as 120 mL/g and it is necessary to increase the addition amount to achieve a desired expansion ratio.

In addition to ADCA and OBSH, guanidine derivatives such as guanidine salts, aminoguanidine salts, diaminoguanidine salts, and triaminoguanidine salts can also be used as a gas generating agent. These guanidine derivatives are also used for an antioxidant for gunpowders, medicaments, and fiber processing, a soap resin stabilizer, and other various synthetic raw materials (see, for example, Non Patent Literature 2). Specifically, for example, gas generating agents containing carbonate salts, nitrate salts, or perchlorate salts of guanidine derivatives are disclosed for air bag systems (see, for example, Patent Literatures 2 to 4).

### Citation List

### Patent Literature

Patent Literature 1: Japanese Patent Laid-Open No. 11-21364
Patent Literature 2: International Publication No. WO 97/29927
Patent Literature 3: Japanese Patent Laid-Open No. 11-292678
Patent Literature 4: Japanese Patent No. 3953187

### Non Patent Literature

Non Patent Literature 1: Hitoshi Kondo, "The Characteristic of Foaming Agents", NIPPON GOMU KYOKAISHI, THE SOCIETY OF RUBBER SCIENCE AND TECHNOLOGY, JAPAN, 2001, Vol. 74, No. 10, pp. 406-411
Non Patent Literature 2: "Guanidine Salts", Fine Chemical, CMC Publishing Co., Ltd., June 2008, Vol. 37, No. 6, pp. 72-75

### Summary of Invention

### Technical Problem

Although the nitrate salts and the like of the guanidine derivatives are compounds that are easily synthesized and widely used, the amounts of gas generation are small when the compounds are used singly. The carbonate salts of the guanidine derivatives have low initial decomposition temperatures, which greatly differ from molding temperatures of general-purpose plastics (for example, thermoplastic resins) and rubbers. Thus, it is difficult to use the above conventional nitrate salts and carbonate salts of the guanidine derivatives as a gas generating agent intended for chemical blowing agents for general-purpose plastics (for example, thermoplastic resins) and rubbers unlike ADCA and OBSH.

Accordingly, an object of the present invention is to provide a gas generating agent having an appropriate initial decomposition temperature, generating a large amount of gas, and generating only a small amount of ammonia gas.

### Solution to Problem

As a result of diligent investigation, the inventors have found that a specific compound can solve the above problems.

The present invention includes the following embodiments.
[1] A gas generating agent, containing a guanidine derivative represented by the following formula (1). 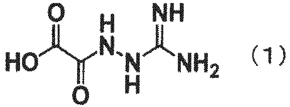
[2] The gas generating agent according to [1] in which the gas generating agent is microencapsulated.
[3] A foamable composition, containing: the gas generating agent according to [1] or [2]; and a material to be foamed.
[4] The foamable composition according to [3] in which the material to be foamed is a thermoplastic resin and/or a rubber.
[5] A foam obtained by foaming the foamable composition according to [3] or [4].
[6] A method of producing a foam, containing a step of heating the foamable composition according to [3] or [4].

### Advantageous Effect of the Invention

The present invention can provide a gas generating agent having an appropriate initial decomposition temperature, generating a large amount of gas, and generating only a small amount of ammonia gas.

### Description of Embodiments

### <Gas Generating Agent>

An embodiment of the present invention relates to a gas generating agent containing a guanidine derivative represented by the following formula (1) (hereinafter, also referred to as "guanidine derivative (1)").

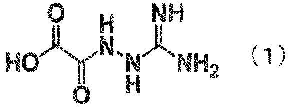

The initial decomposition temperature of the gas generating agent is preferably an initial decomposition temperature at which the gas generating agent is usable as a chemical blowing agent for, for example, general-purpose plastics (for example, thermoplastic resins) and rubbers, and specifically, is preferably 90 to 380°C, and more preferably 110 to 250°C.

The amount of gas generation of the gas generating agent during foaming is preferably 120 mL/g or more, more preferably 140 mL/g or more, and still more preferably 160 mL/g or more.

The amount of ammonia gas generation of the gas generating agent during foaming is preferably 10 mg/g or less, more preferably 5 mg/g or less, and still more preferably 1 mg/g or less.

The guanidine derivative (1) has, as described in the following Examples, an initial decomposition temperature of 225°C and can generate 192 mL/g of gas, but the generating amount of ammonia gas is only 0.12 mg/g. Thus, the guanidine derivative (1) can be suitably used as a chemical blowing agent for general-purpose plastics (for example, thermoplastic resins) and rubbers.

The gas generating agent of the present embodiment may further contain an auxiliary agent. Examples of the auxiliary agent include, but not particularly limited to, an oxidant, a crosslinking agent (C1), a nitrite salt, and a hydrotalcite. Further containing such an auxiliary agent can allow the gas generating agent of the present embodiment to further suppress the generation of a corrosive gas such as ammonia, and a temperature at which a foam described later is produced also tends to be within a suitable range.

When the gas generating agent of the present embodiment contains the auxiliary agent, a content of the guanidine derivative (1) is preferably 0.5 to 95 mass% based on the total mass of the guanidine derivative (1) and the auxiliary agent.

Examples of the oxidant include, but not particularly limited to, sodium percarbonate. One oxidant may be used singly, and two or more oxidants may be used in combination.

A content of the oxidant is preferably 0.5 to 95 mass%, and more preferably 5 to 50 mass% based on the total mass of the guanidine derivative (1) and the auxiliary agent.

Examples of the crosslinking agent (C1) include, but not particularly limited to, dicumyl peroxide, di-t-butyl peroxide, 2,5-dimethyl-2,5-di-(t-butylperoxy)hexane, 2,5-dimethyl-2,5-di-(t-butylperoxy)hexyne, 1,3-bis(t-butylperoxyisopropyl)benzene, 1,1-bis(t-butylperoxy)-3,3,5-trimethylcyclohexane, 1,1-bis[t-butylperoxy]cyclohexane, n-butyl-4,4-bis(t-butylperoxy)valerate, benzoyl peroxide, p-chlorobenzoyl peroxide, 2,4-dichlorobenzoyl peroxide, t-butyl peroxybenzoate, t-butyl perbenzoate, t-butylperoxy isopropyl carbonate, diacetyl peroxide, lauroyl peroxide, and t-butyl cumyl peroxide. One crosslinking agent (C1) may be used singly, and two or more crosslinking agents (C1) may be used in combination.

A content of the crosslinking agent (C1) is preferably 0.1 to 10 mass%, and more preferably 0.5 to 1.5 mass% based on the total mass of the guanidine derivative (1) and the auxiliary agent.

Examples of the nitrite salt include, but not particularly limited to, sodium nitrite, potassium nitrite, and calcium nitrite. One nitrite salt may be used singly, and two or more nitrite salts may be used in combination. The nitrite salt is preferably a pulverized fine powder.

A content of the nitrite salt is preferably 0.5 to 60 mass%, and more preferably 15 to 55 mass% based on the total mass of the guanidine derivative (1) and the auxiliary agent.

The hydrotalcite is a crystalline composite metal hydroxide, and preferably a hydrotalcite represented by the following general formula (H).

[M²⁺₁₋ₓM³⁺ₓ(OH)₂]^{x+}[Aⁿ⁻_{x/n}·mH₂O]^{x-} (H)

[In the general formula (H),
M²⁺ is a divalent metal ion of a metal selected from the group consisting of Mg, Mn, Fe, and Zn;
M³⁺ is a trivalent metal ion of a metal selected from the group consisting of Al, Fe, and Cr;
Aⁿ⁻ is an n-valent anion of a group selected from the group consisting of OH, F, Cl, Br, NO₃, CO₃, and SO₄;
x is in a range of 0 < x ≤ 0.33;
n denotes an integer; and
m is 0 or greater.]

Here, m is preferably 0 but varies depending on the state of dryness and storage of the hydrotalcite, and thereby m is not particularly limited as long as the effect of the present invention is not impaired. n is a valency of the anion, preferably 1 or 2, and more preferably 2.

Among these, a hydrotalcite in which M²⁺ is Mg²⁺ and M³⁺ is Al³⁺ is preferable, and the molar ratio of Al:Mg is preferably 2:5 to 2:10 in terms of availability. For example, when the molar ratio of Al:Mg is 2:5, the molar fraction x of Al (x = Al/(Mg + Al)) is 0.29, and when the molar ratio of Al to Mg is 2:10, the molar fraction x of Al is 0.17.

The hydrotalcite has an activity to enhance the reactivity of a nitrite salt. Blending the hydrotalcite enables to: promote the decomposition of ammonia gas that can be generated when the gas generating agent is heated; enhance the reactivity of the nitrite salt to thereby suppress the generation of nitrous acid gas; and promote the generation of nitrogen gas to enhance the effervescence of the gas generating agent. Although a particle diameter of the hydrotalcite is not particularly limited, it is preferable that dispersibility in the gas generating agent be enhanced for causing the hydrotalcite to effectively act on the reaction between the guanidine derivative (1) and the nitrite salt, and a fine-powder hydrotalcite having a maximum particle diameter of 80 µm or less is more preferable.

A content of the hydrotalcite is preferably 1 to 40 mass%, and more preferably 5 to 25 mass% based on the total mass of the guanidine derivative (1) and the auxiliary agent.

Various stabilizers, pigments/fillers, foaming regulators, and the like may be further blended with the gas generating agent of the present embodiment as long as the effect of the present invention is not impaired. Examples of the stabilizer include, but not particularly limited to, tribasic lead sulfate, dibasic phosphite salts, lead stearate, zinc stearate, zinc carbonate, zinc oxide, aluminum stearate, dibutyltin malate, and urea. Examples of the pigment/filler include, but not particularly limited to, chrome yellow, carbon black, titanium dioxide, and calcium carbonate. Examples of the foaming regulator include, but not particularly limited to, maleic acid.

The gas generating agent of the present embodiment may be a microencapsulated gas generating agent. The microencapsulated gas generating agent is preferably a gas generating agent having a core-shell structure.

Examples of the microencapsulated gas generating agent include a microencapsulated gas generating agent in which the guanidine derivative (1) and, if necessary, the auxiliary agent are core components. Examples of a main component of the shell of the microencapsulated gas generating agent include, but not particularly limited to, a polymethyl methacrylate, and preferably contains a fatty acid salt or a surfactant as a dispersant. Introducing cells into a rubber or a thermoplastic resin using such a microencapsulated gas generating agent enables to introduce uniform cells into the polymer without inhibiting vulcanization and crosslinking, and moreover, without generating decomposition residues and VOC components, thereby a decrease in crosslinking density is suppressed, and a crosslinked foam having a good cell state and excellent foam characteristics can be obtained.

As a detail of the microcapsule, Japanese Patent No. 6118002 can be referred to.

### <Foamable Composition>

An embodiment of the present invention relates to a foamable composition containing the gas generating agent and a material to be foamed. Examples of the material to be foamed include, but not particularly limited to, a thermoplastic resin and/or a rubber. One material to be foamed may be used singly, and two or more materials to be foamed may be used in combination.

A content of the guanidine derivative (1) is appropriately selected according to the intended expansion ratio, and may be, for example, 1 to 30 mass% or 5 to 20 mass% based on the foamable composition.

Examples of the thermoplastic resin include a vinyl chloride resin, a vinyl chloride copolymer resin, a polyethylene, a polypropylene, a polyolefin copolymer resin such as an ethylene-propylene copolymer, a polyamide resin such as a nylon, a polyester resin such as a polyethylene terephthalate (PET), a polystyrene resin, and an acrylonitrile-butadiene-styrene copolymer (ABS resin).

Examples of the rubber include a natural rubber (NR), a polyisoprene rubber, a styrene-butadiene rubber (SBR), an acrylonitrile-butadiene rubber, a chloroprene rubber, an ethylene-propylene rubber, an ethylene-propylene-diene rubber, and a butadiene rubber.

The foamable composition of the present embodiment may further contain a crosslinking agent (C2) when containing the thermoplastic resin as the material to be foamed. The crosslinking agent (C2) may be the same as or different from the crosslinking agent (C1) contained in the gas generating agent. A content of the crosslinking agent (C2) is preferably 0.1 to 10 parts by mass, and more preferably 0.5 to 1.5 parts by mass based on 100 parts by mass of the thermoplastic resin.

The foamable composition of the present embodiment may further contain a vulcanizing agent, a filler, a vulcanizing accelerator and the like when containing the rubber as the material to be foamed. Examples of the vulcanizing agent include sulfur. Examples of the filler include heavy calcium carbonate, light calcium carbonate, and carbon black. Examples of the vulcanizing accelerator include a dithiocarbamate salt-based vulcanizing accelerator and a dithiocarbamic acid-based vulcanizing accelerator, and specifically include DM (dibenzylthiazole-disulfide), zinc dimethyldithiocarbamate, and zinc dibutyldithiocarbamate.

A content of the vulcanizing agent is preferably 0.1 to 10 parts by mass, a content of the filler is preferably 10 to 150 parts by mass, and a content of the vulcanizing accelerator is preferably 0.1 to 20 parts by mass, based on 100 parts by mass of the rubber.

The foamable composition of the present embodiment may contain other additives. Examples of other additives include Diana Process Oil, zinc oxide, stearic acid, calcium oxide, a urea-based auxiliary, silicon dioxide (silica), a talc, magnesium oxide, zinc stearate, calcium hydroxide, barium stearate, dibasic lead phosphite, and lead oxide.

### <Foam and Method of Producing the Same>

An embodiment of the present invention relates to a foam obtained by foaming the foamable composition and a method of producing the same. The method of producing the foam is not particularly limited as long as the method includes a step of heating the foamable composition. Examples of the method include a method described in Japanese Patent No. 6118002.

### Examples

Here, the present invention will be described in more particular by way of Examples and Comparative Examples, but the present invention is not at all limited by the Examples.

In Examples and Comparative Examples provided below, unless otherwise specified, the structure of a compound used as a gas generating agent was identified by CHN elemental analysis and the melting point. The initial decomposition temperature, the amount of gas generation, and the amount of ammonia generation of a gas generating agent were evaluated by the respective following methods.

### <Measurement of Initial decomposition Temperature of Gas Generating Agent>

The initial decomposition temperature of a gas generating agent was measured by using a simultaneous thermogravimetric analyzer (EXSTAR 6000, manufactured by SII NanoTechnology Inc.) in air under conditions where the starting temperature was 25°C and the temperature was raised at 10°C/min. A temperature at which the weight was lowered by 5% than the weight at the beginning of raising the temperature was regarded as the initial decomposition temperature.

### <Measurement of Amount of Gas Generation>

In a test tube, 0.5 g of a gas generating agent was placed and 10 mL of liquid paraffin as a heating medium was added, then the test tube and a gas burette were connected with a rubber tube, and the test tube was immersed in an oil bath at 60°C. Thereafter, the oil bath was heated to 240°C at a rate of temperature rise of 2°C/min. All of gas generated during the heating was captured with the gas burette to determine the amount of gas generation (mL) per gram of the gas generating agent.

### <Measurement of Amount of Ammonia Generation>

In a test tube, 0.5 g of a gas generating agent was placed and 10 mL of liquid paraffin as a heating medium was added, then this test tube, a screw-cap test tube, and a screw-cap bottle containing 200 mL of a 0.5 mol/L aqueous solution of boric acid were connected with a rubber tube in this order. The test tube containing the gas generating agent was heated to 210°C with a block heater. Ammonia gas generated during the heating was captured with the 0.5 mol/L aqueous solution of boric acid, and an ammonium ion in the boric acid was quantified with an ion chromatograph (ICA-2000, manufactured by DKK-TOA CORPORATION) to determine the amount of ammonia gas generation (mg) per gram of the gas generating agent.

### (Synthesis Example 1) Synthesis of Guanidine Derivative (1)

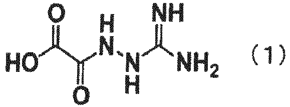

To a 500-mL round-bottomed flask, 40.83 g (300 mmol) of aminoguanidine carbonate (manufactured by Tokyo Chemical Industry Co., Ltd.) and 100 g of water were added, and then the mixture was stirred using a magnetic stirrer. Then, 37.82 g (300 mmol) of oxalic acid dihydrate (manufactured by RYOKO CHEMICAL CO., LTD.) was added in small portions, and the mixture was stirred until foaming settled. Thereafter, the slurry was heated to 100°C, and further stirred for 2 hours. A precipitated white solid was collected by filtration, washed with distilled water, and then dried at 50°C for 18 hours to obtain 26.81 g (183.63 mmol) of a white solid. Elemental analysis was performed on the obtained solid by using a carbon-hydrogen-nitrogen simultaneous quantifier CHN Coder MT-6 (Yanaco Analytical Instruments Inc.), the values calculated were C, 24.66; H, 4.14; N, 38.35 and, on the other hand, the values found were C, 24.39; H, 4.24; N, 38.01, and the obtained solid was thus confirmed as a compound represented by the formula (1). The molar yield was 61%. The melting point of the obtained solid was measured by using melting a point apparatus MPA 100 (Stanford Research Systems), and was 221 to 223°C.

### (Comparative Synthesis Example 1) Synthesis of Guanidine Oxalate (2)

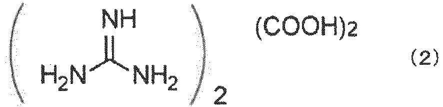

To a 30-mL round-bottomed flask, 1.80 g (10 mmol) of guanidine carbonate (manufactured by Tokyo Chemical Industry Co., Ltd.) and 2.5 mL of water were added, the mixture was stirred at room temperature, and then 907 mg (10 mmol) of oxalic acid (manufactured by Wako Pure Chemical Industries Ltd.) was added. Foaming occurred when the oxalic acid was added. After further stirring for 3 hours, the reaction liquid was added dropwise to ethanol, a precipitated white solid was collected by filtration, washed with ethanol, and then vacuum-dried at 50°C for 17 hours to obtain 1.55 g (7.5 mmol) of a white solid. Elemental analysis was performed on the obtained solid by using a carbon-hydrogen-nitrogen simultaneous quantifier CHN Coder MT-6 (Yanaco Analytical Instruments Inc.), the values calculated were C, 23.08; H, 5.81; N, 40.37 and, on the other hand, the values found were C, 23.05; H, 6.22; N, 39.92, and the obtained solid was thus confirmed as the guanidine oxalate (2). The molar yield was 75%. The melting point of the obtained solid was measured by using a melting point apparatus MPA 100 (Stanford Research Systems), and was 149 to 150°C.

### (Example 1)

The initial decomposition temperature and the amount of gas generation of the guanidine derivative (1) obtained in Synthesis Example 1 were measured. The results are shown in Table 1.

### (Comparative Example 1)

The initial decomposition temperature and the amount of gas generation of the guanidine oxalate (2) obtained in Comparative Synthesis Example 1 were measured. The results are shown in Table 1.

### (Comparative Example 2)

The initial decomposition temperature and the amount of gas generation of guanidine carbonate (manufactured by Tokyo Chemical Industry Co., Ltd.) were measured. The results are shown in Table 1.

### (Comparative Example 3)

The initial decomposition temperature and the amount of gas generation of guanidine nitrate (manufactured by Tokyo Chemical Industry Co., Ltd.) were measured. The results are shown in Table 1.

### (Comparative Example 4)

The initial decomposition temperature and the amount of gas generation of aminoguanidine carbonate (manufactured by Tokyo Chemical Industry Co., Ltd.) were measured. The results are shown in Table 1.

### (Comparative Example 5)

The initial decomposition temperature and the amount of gas generation of aminoguanidine nitrate (manufactured by SIGMA-ALDRICH) were measured. The results are shown in Table 1.

### (Comparative Example 6)

The initial decomposition temperature and the amount of gas generation of 4,4'-oxybis(benzenesulfonyl hydrazide) (OBSH) (manufactured by Eiwa Chemical Ind. Co., Ltd.) were measured. The results are shown in Table 1.

**[Table 1]**

| | Example 1 | Comparative Example 1 | Comparative Example 2 | Comparative Example 3 | Comparative Example 4 | Comparative Example 5 | Comparative Example 6 |
|---|---|---|---|---|---|---|---|
| Initial Decomposition Temperature (°C) | 225 | 205 | 186 | 294 | 106 | 258 | 172 |
| Amount of Gas Generation (mL/g) | 192 | 3 | 38 | 2 | 144 | 0 | 120 |

It was found from Table 1 that the guanidine derivative (1) had an initial decomposition temperature at which the guanidine derivative (1) can be used as a chemical blowing agent for general-purpose plastics (for example, thermoplastic resins) and rubbers, and generated a large amount of gas.

### (Example 2)

The amount of ammonia gas generation of the guanidine derivative (1) obtained in Synthesis Example 1 was measured. The result is shown in Table 2.

### (Comparative Example 7)

The amount of ammonia gas generation of the guanidine oxalate (2) obtained in Comparative Synthesis Example 1 was measured. The measurement in Comparative Example 7 was performed by the method in <Measurement of Amount of Ammonia Generation> in which the heating temperature with the block heater was changed to 228°C. The result is shown in Table 2.

### (Comparative Example 8)

The amount of ammonia gas generation of azodicarbonamide (ADCA) (manufactured by Eiwa Chemical Ind. Co., Ltd.) was measured. The result is shown in Table 2.

**[Table 2]**

| | Example 2 | Comparative Example 7 | Comparative Example 8 |
|---|---|---|---|
| Amount of Ammonia Gas | 0.12 | 1.46 | 11.11 |
| Generation (mg/g) | | | |

It was found from Table 2 that the guanidine derivative (1) generated only a small amount of ammonia gas.

### (Example 3)

With an open roll mill heated at 110°C, 100 parts by mass of a polyethylene (trade name "YF-30", manufactured by Japan Polyethylene Corporation) was kneaded, and then 1 part by mass of a decomposition auxiliary (trade name "Cellpaste 101", manufactured by Eiwa Chemical Ind. Co., Ltd.) was added to knead. Thereafter, 10 parts by mass of the guanidine derivative (1) was added to knead, then 1 part by mass of dicumyl peroxide (DCP) (trade name "Percumyl D", manufactured by NOF CORPORATION) was added to knead, and the kneaded product was recovered from the open roll mill. The kneaded product was introduced into a mold (95 mm × 95 mm × 10 mm) of a pressing apparatus heated to 160°C such that the internal volume was filled 100%, and pressurized for 30 minutes at a pressing pressure of 150 kgf/cm². After 30 minutes, the pressure was released to obtain a foam. The evaluation results of the obtained foam are shown in Table 3.

### (Comparative Example 9)

A foam was obtained under the same conditions as in Example 3 except that the gas generating agent was changed to 5 parts by mass of azodicarbonamide (ADCA) (manufactured by Eiwa Chemical Ind. Co., Ltd.), the addition amount of Cellpaste 101 was changed to 2.5 parts by mass, 2.5 parts by mass of zinc white was added, and the time of pressurizing at a pressure of 150 kgf/cm² was changed to 15 minutes. The evaluation results of the obtained foam are shown in Table 3.

### (Comparative Example 10)

A foam was obtained under the same conditions as in Example 3 except that the gas generating agent was changed to sodium hydrogen carbonate (trade name "Cellborn FE-507", manufactured by Eiwa Chemical Ind. Co., Ltd.) and no decomposition auxiliary was used. The evaluation results of the obtained foam are shown in Table 3.

The specific gravity of the foam was measured with an electronic densimeter MD-200S.

The expansion ratio was calculated by [the specific gravity of polyethylene (0.92)]/[the specific gravity of the foam].

**[Table 3]**

| | | Example 3 | Comparative Example 9 | Comparative Example 10 |
|---|---|---|---|---|
| Resin | YF-30 | 100 parts | 100 parts | 100 parts |
| Gas Generating Agent | Guanidine derivative (1) | 10 parts | - | - |
| | ADCA | - | 5 parts | - |
| | Cellborn FE-507 | - | - | 10 parts |
| Decomposition Auxiliary | Cellpaste 101 | 1 part | 2.5 parts | - |
| | Zinc white | - | 2.5 parts | - |

| Crosslinking Agent | Percumyl D | 1 part | 1 part | 1 part |
|---|---|---|---|---|
| Expansion Time (minute) | | 30 | 15 | 30 |
| Specific Gravity | | 0.073 | 0.076 | 0.166 |
| Expansion Ratio | | 12.6 | 12.1 | 5.5 |
| Color of Foam | | white | pale yellow | white |

It was found from Table 3 that a white foam can be obtained by using the guanidine derivative (1).

### (Example 4)

With a cooled (water-flowed) open roll mill, 100 parts by mass of a saturated hydrocarbon rubber (trade name "EPT 4021", manufactured by Mitsui Chemicals, Inc.) was kneaded, then 50 parts by mass of carbon black (trade name "Asahi #50 U", manufactured by Asahi Carbon Co., Ltd.), 40 parts by mass of light calcium carbonate (manufactured by Ohmi Chemical Industry Co., Ltd.), 50 parts by mass of Diana Process Oil (trade name "PW-90", manufactured by Idemitsu Kosan Co., Ltd.), 5 parts by mass of zinc oxide (ZnO (zinc white), manufactured by MITSUI MINING & SMELTING CO., LTD.), 2 parts by mass of stearic acid (CH₃(CH₂)₁₆COOH, trade name "Tsubaki", manufactured by NOF CORPORATION), 2 parts by mass of a polyethylene glycol (PEG #4000, manufactured by FUJIFILM Wako Pure Chemical Corporation, 1st Grade Reagent), and 6.25 parts by mass of calcium oxide (trade name "VESTA 80", manufactured by Inoue Calcium Corporation) were added and kneaded to obtain a kneaded product A. The kneaded product A was stored for 1 day or more at normal temperature for aging.

The aged, kneaded product A was kneaded with a cooled (water-flowed) roll mill, then 1.5 parts by mass of a sulfenamide-based vulcanizing accelerator (N-oxydiethylene-2-benzothiazolylsulfenamide, trade name "Nocceler MSA-G", manufactured by OUCHI SHINKO CHEMICAL INDUSTRIAL CO., LTD.) and 0.5 parts by mass of a dithiocarbamic acid-based vulcanizing accelerator (tellurium diethyldithiocarbamate, trade name "Nocceler TTTE", manufactured by OUCHI SHINKO CHEMICAL INDUSTRIAL CO., LTD.) were added to knead, then 1.5 parts by mass of powder sulfur (trade name "Fine Powder Sulfur S", manufactured by Hosoi Chemical Industry Co., Ltd.), 5 parts by mass of the guanidine derivative (1), and 2.5 parts by mass of a urea-based auxiliary (trade name "Cellpaste K5", manufactured by Eiwa Chemical Ind. Co., Ltd.) were added to knead, and a kneaded product B was recovered from the roll mill.

The kneaded product B was introduced into an extruder and extruded at a die temperature of 60°C to obtain a sheet-shaped formed article. The obtained sheet-shaped formed article was aged for 1 day at normal temperature, and then heated in an oven at 200°C for 10 minutes to obtain a form. The expansion ratio of the obtained foam was 2.104.

As a blank for calculating the expansion ratio, a kneaded product C was produced by the same method as the production method for the kneaded product B except that no guanidine derivative (1) was blended, and the specific gravity of the aged, sheet-shaped formed article was measured. The expansion ratio was calculated by the specific gravity of the sheet-shaped formed article (1.071)/the specific gravity of the foam (0.509). The specific gravity was measured with an electronic gravimeter MD-200S.

### (Example 5)

So that 72.7 weight% of a low-density polyethylene (trade name "NUC-8009", manufactured by NUC Corporation), 7 weight% of Diana Process Oil (trade name "PW-90", manufactured by Idemitsu Kosan Co., Ltd.), 0.3 weight% of an antistatic agent (trade name "RIKEMAL S-100", manufactured by RIKEN VITAMIN Co., Ltd.), and 20 weight% of the guanidine derivative (1) obtained in Synthesis Example 1 were contained, each material was introduced into a pressurizing kneader and kneaded to obtain a kneaded product A.

The kneaded product A was introduced to a feeder ruder to perform extrusion, and pelletized to obtain a masterbatch B.

Into an injection molding machine ("MD-100X", manufactured by NIIGATA MACHINE TECNO CO., LTD.), 100 parts by mass of a nylon (trade name "GLAMIDE TY-151 MCBX-15", manufactured by TOYOBO CO., LTD.) and 3 parts by weight of the masterbatch B were introduced, and injected into a mold for a plat plate in which the fixed mold was adjusted at 40°C and the movable mold was adjusted at 50°C, at a molding temperature of 280°C, and at an injecting speed of 100 mm/second. Then, the mold was opened with a core-back thickness of 1.0 mm, and the cavity volume was expanded to obtain an injection-foaming formed article. The thickness of the obtained injection-foaming formed article was 2.70 mm, and the expansion ratio was 1.59.

As a blank for calculating the expansion ratio, an injection-molded product obtained by the same method except that the masterbatch B was not blended and the core-back of the mold was not performed, was used to measure the thickness. The expansion ratio was calculated by the thickness of the foaming-formed article (2.70 mm)/the thickness of the blank formed article (1.70 mm). The thickness was measured with a digital caliper.

## Claims

1. A gas generating agent, comprising a guanidine derivative represented by the following formula (1).

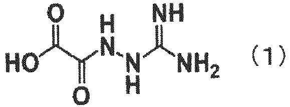

2. The gas generating agent according to claim 1, wherein the gas generating agent is microencapsulated.

3. A foamable composition, comprising: the gas generating agent according to claim 1 or 2; and a material to be foamed.

4. The foamable composition according to claim 3, wherein the material to be foamed is a thermoplastic resin and/or a rubber.

5. A foam obtained by foaming the foamable composition according to claim 3 or 4.

6. A method of producing a foam, comprising a step of heating the foamable composition according to claim 3 or 4.
